# EUROPÄISCHE PATENTANMELDUNG

(11) **EP 3 412 188 A1**
(43) Veröffentlichungstag der Anmeldung: **12.12.2018**
(21) Anmeldenummer: 17174488.1
(22) Anmeldetag: 06.06.2017
(51) Int. Cl.: A47L 9/24, B23Q 11/00

(54) **SAUGDÜSE FÜR EINE HANDFRÄSE**

(71) Anmelder: HILTI Aktiengesellschaft, 9494 Schaan (LI)
(72) Erfinder: Möglich, Tobias, 80339 München (DE)
(74) Vertreter: Hilti Aktiengesellschaft Corporate Intellectual Property

(57) **Zusammenfassung**

Saugdüse (100) für eine Handfräse (200), wobei die Saugdüse (100) einen zum Anschluss an ein Staubabsaugsystem (300) ausgebildeten Absauganschluss (30) aufweist und die Handfräse (200) mit einem Tiefenanschlag (210) ausgestattet ist, mittels dem eine Eintauchtiefe (ET) eines Fräswerkzeugs (220) der Handfräse (200) begrenzt werden kann, wobei die Saugdüse (100) einen Anschlussbereich (10) aufweist über den die Saugdüse (100) wiederlösbar, vorzugsweise werkzeugfrei wiederlösbar, an dem Tiefenanschlag (210) befestigbar ist.

## Beschreibung

Die vorliegende Erfindung betrifft eine Saugdüse für eine Handfräse, wobei die Saugdüse einen zum Anschluss an ein Staubabsaugsystem ausgebildeten Absauganschluss aufweist und die Handfräse mit einem Tiefenanschlag ausgestattet ist, mittels dem eine Eintauchtiefe eines Fräswerkzeugs der Handfräse begrenzt werden kann.

Solche Saugdüsen sind grundsätzlich aus dem Stand der Technik bekannt. Die Benutzung einer Handfräse erzeugt für gewöhnlich, insbesondere beim Bearbeiten von mineralischen Werkstoffen, eine Menge Staub, die über eine Saugdüse, die an ein Staubabsaugsystem anzuschließen ist, abgesaugt werden muss. Saugdüsen werden typischerweise in der Nähe eines Fräswerkzeugs angebracht, um einen Großteil des Staubes aufzunehmen.

Es ist Aufgabe der vorliegenden Erfindung, eine Saugdüse bereitzustellen, die eine einfache und sichere Handhabbarkeit begünstigt.

Die Aufgabe wird dadurch gelöst, dass die Saugdüse einen Anschlussbereich aufweist, über den die Saugdüse wiederlösbar, vorzugsweise werkzeugfrei wiederlösbar, an dem Tiefenanschlag befestigbar ist.

Die Erfindung schließt die Erkenntnis ein, dass Saugdüsen des Standes der Technik umständlich an einer Handfräse zu montieren bzw. von dieser zu lösen sind. Dabei ist typischerweise ein spezielles Werkzeug erforderlich. Durch die meist umständliche Montage der Saugdüse an der Handfräse wird häufig gänzlich auf ein Absaugen des Staubs verzichtet, was zu einer Gesundheitsbeeinträchtigung des Benutzers führen kann.

Dadurch, dass die erfindungsgemäße Saugdüse wiederlösbar, vorzugsweise werkzeugfrei wiederlösbar, an dem Tiefenanschlag befestigbar ist, wird eine umständliche Montage vermieden und somit letztendlich ein unerwünschter Verzicht auf das Absaugen vermieden.

Die Erfindung schließt weiterhin die Erkenntnis ein, dass Saugdüsen des Standes der Technik, die fest an der Handfräse montiert sind, leichter abbrechen können und insbesondere dadurch beschädigt werden, dass eine Handfräse samt Düse zu Boden fällt. Die erfindungsgemäße Saugdüse schafft eine Grundlage dafür, auch diesen Nachteil zu vermeiden.

In einer besonders bevorzugten Ausgestaltung ist am Anschlussbereich wenigstens ein Rastelement ausgebildet, das vorzugsweise mit einem korrespondierenden Rastelement des Tiefenanschlags in Eingriff steht, wenn der Anschlussbereich am Tiefenanschlag befestigt ist.

Es hat sich als vorteilhaft herausgestellt, wenn das Rastelement als Rastnase und das korrespondierende Rastelement als Ausnehmung ausgebildet ist. Durch Zusammenwirken des als Rastnase ausgebildeten Rastelements mit dem als Ausnehmung ausgebildeten korrespondierenden Rastelement kann eine Befestigung im Sinne eines Schnappverschlusses realisiert sein. Die Paarung aus Rastelement und korrespondierendem Rastelement kann derart dimensioniert sein, dass die Rastverbindung beim Überschreiten einer Rastkraft gelöst wird. Eine solche Rastkraft kann beispielsweise beim Aufprall des Systems aus Saugdüse und Handfräse auf den Boden auftreten. In diesem Fall würde sich die Saugdüse bei einem Aufprall auf den Boden von der Handfräse lösen, wodurch die Wahrscheinlichkeit einer Beschädigung der Saugdüse verringert wird.

Es hat sich als vorteilhaft herausgestellt, wenn der Anschlussbereich ringförmig ausgebildet ist, vorzugsweise derart, dass der Anschlussbereich das Fräswerkzeug oder eine Aufnahmespindel ringförmig umschließt, oder zumindest koaxial zum Fräswerkzeug oder der Aufnahmespindel gelegen ist, wenn der Anschlussbereich am Tiefenanschlag befestigt ist. Dadurch kann eine optimale Staubabsaugung um das Fräswerkzeug herum realisiert werden.

Es hat sich ebenfalls als vorteilhaft herausgestellt, wenn am ringförmig ausgebildeten Anschlussbereich zwei gegenüberliegende Rastelemente und/oder am Tiefenanschlag wenigstens zwei korrespondierende Rastelemente ausgebildet sind. Vorzugsweise sind am ringförmig ausgebildeten Anschlussbereich genau zwei Rastelemente ausgebildet, die einander gegenüberliegen, vorzugsweise diametral gegenüberliegen.

Vorzugsweise sind am Tiefenanschlag des Fräswerkzeugs vier korrespondierende Rastelemente ausgebildet. Diese können jeweils als Ausnehmung ausgebildet sein und/oder vorzugsweise gleichmäßig voneinander beabstandet entlang des Umfangs eines vorzugsweise ringförmig ausgebildeten Tiefenanschlags angeordnet sein. Dies hat den Vorteil, dass die Saugdüse in verschiedenen Positionen bzw. Ausrichtungen an dem Tiefenanschlag der Handfräse anordenbar ist.

In einer besonders bevorzugten Ausgestaltung ist ein erstes der Rastelemente starr am Anschlussbereich ausgebildet und/oder ein zweites der Rastelemente mittels eines Federelements federnd am Anschlussbereich ausgebildet.

Vorzugsweise ist das Federelement außerhalb des ringförmig ausgebildeten Anschlussbereichs in Richtung des Absauganschlusses befindlich.

Die eingangs erwähnte Rastkraft kann über entsprechende Dimensionierung des Federelements festgelegt sein. Gleichzeitig kann durch manuelles Betätigen des Federelements, beispielsweise durch Drücken mittels des Daumens, das federnd am Anschlussbereich ausgebildete zweite der Rastelemente verschoben und somit die Saugdüse besonders leicht und komfortabel vom Tiefenanschlag der Handfräse gelöst werden.

In einer weiteren besonders bevorzugten Ausgestaltung ist am äußeren Umfang des ringförmig ausgebildeten Anschlussbereichs wenigstens eine Druckausgleichsöffnung vorgesehen. Es können mehrere Druckausgleichsöffnungen vorgesehen sein, die entlang des äußeren Umfangs angeordnet sind. Vorzugsweise sind genau zwei Druckausgleichsöffnungen vorgesehen, die auf der Seite des ringförmig ausgebildeten Anschlussbereichs liegen, der dem Absauganschluss abgewandt ist.

Es hat sich als vorteilhaft herausgestellt, wenn die Saugdüse aus einem transparenten Kunststoff besteht oder zumindest einen solchen aufweist. Derart kann die Strömung innerhalb der Saugdüse beobachtet und etwaige Verstopfungen bereits frühzeitig erkannt werden. Darüber hinaus ist die Arbeitsstelle durch die Verwendung eines transparenten Kunststoffs für den Anwender einsehbar, wodurch ein genaueres Arbeiten ermöglicht wird.

Die Erfindung wird ebenfalls gelöst durch ein Frässystem mit einer Handfräse, die einen Tiefenanschlag aufweist, mittels dem eine Eintauchtiefe eines Fräswerkzeugs der Handfräse begrenzt werden kann, und mit einer Saugdüse der vorgeschriebenen Art.

Vorzugsweise ist der Tiefenanschlag der Handfräse mittels einer Schraubverbindung werkzeugfrei wiederlösbar an der Handfräse befestigt oder befestigbar.

Dadurch, dass die Saugdüse an dem Tiefenanschlag befestigt ist und der Tiefenanschlag selbst mittels der Schraubverbindung schnell und einfach von der Handfräse lösbar ist, kann auch die Saugdüse zusammen mit dem Tiefenanschlag schnell und einfach von der Handfräse abgenommen werden. Dies ist insbesondere nützlich bei Feinarbeiten, wenn der Benutzer kurz ein kleines Stück fräsen will und weder der Tiefenanschlag noch die Saugdüse benötigt wird. Saugdüse und Tiefenanschlag können damit zusammen entnommen und auch wieder verbunden werden mit der Handfräse.

Ebenfalls wird die Erfindung gelöst durch eine Handfräse, die einen Tiefenanschlag aufweist, mittels dem eine Eintauchtiefe eines Fräswerkzeugs der Handfräse begrenzt werden kann, wobei am Tiefenanschlag ein korrespondierendes Rastelement in Form einer Ausnehmung ausgebildet ist. Die erfindungsgemäße Handfräse kann durch die mit Bezug auf die oberen Ausführungsbeispiele beschriebenen Merkmale weitergebildet sein.

Weitere Vorteile ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert. Es zeigen:
- Fig. 1: ein bevorzugtes Ausführungsbeispiel einer erfindungsgemäßen Saugdüse;
- Fig. 2: ein System aus Saugdüse und Handfräse;
- Fig. 3: das System aus Fig. 2, wobei die Saugdüse an einem Tiefenanschlag der Handfräse angeordnet ist;
- Fig. 4: einen Schnitt durch die Darstellung der Fig. 3; und
- Fig. 5: einen Schnitt durch die Saugdüse der Fig. 1.

### Ausführungsbeispiele:

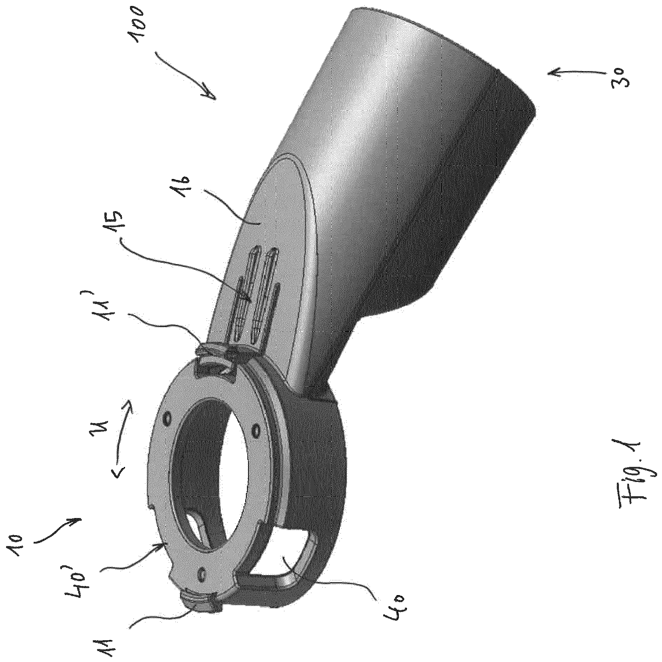

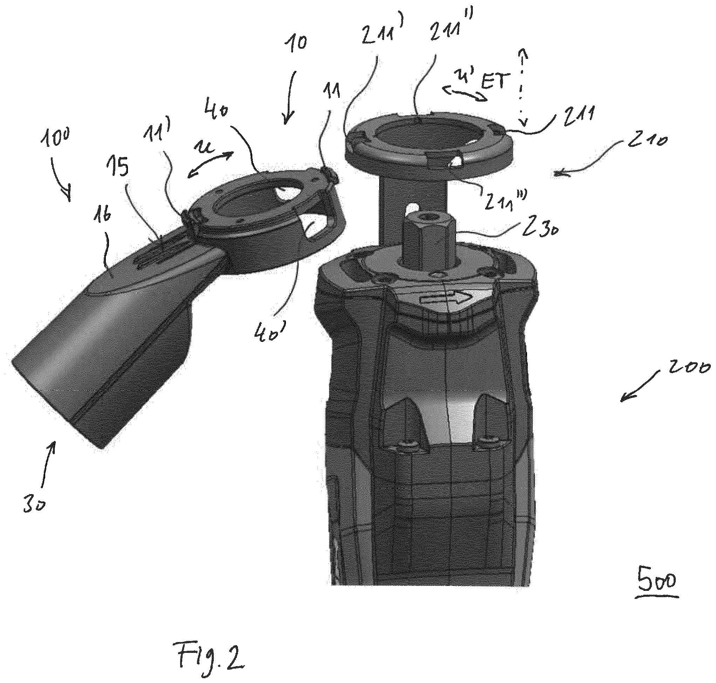

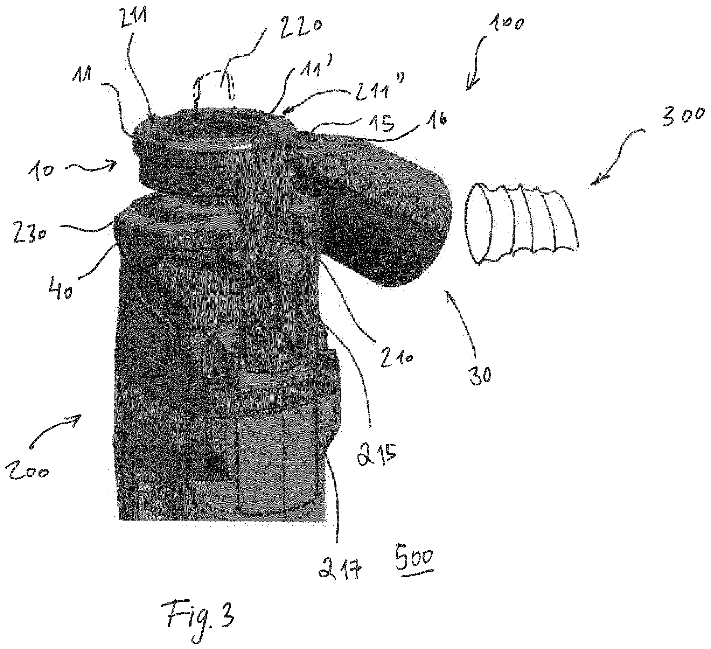

Bevorzugtes Ausführungsbeispiel einer erfindungsgemäßen Saugdüse 100 ist in Fig. 1 dargestellt. Die Saugdüse 100 ist bestimmt zum Anschluss an eine Handfräse 200 (vgl. Fig. 2). Die Saugdüse 100 weist einen zum Anschluss an ein Staubabsaugsystem 300 (vgl. schematisch in Fig. 3) ausgebildeten Absauganschluss 30 auf. Die Saugdüse 100 verfügt über einen Anschlussbereich 10, über den die Saugdüse 100 werkzeugfrei wiederlösbar an einem Tiefenanschlag 210 (vgl. Fig. 2) befestigbar ist.

Im Ausführungsbeispiel der Fig. 1 ist der Anschlussbereich 10 ringförmig ausgebildet und zwar derart, dass der Anschlussbereich 10 ein Fräswerkzeug 220 (vgl. Fig. 3) ringförmig umschließt, wenn der Anschlussbereich 10 wie in Fig. 3 gezeigt am Tiefenanschlag 210 befestigt ist.

Am Anschlussbereich 10 der Saugdüse 100 sind ein erstes Rastelement 11 und ein zweites Rastelement 11' ausgebildet. Es sind somit genau zwei Rastelemente 11, 11' vorgesehen, die als Rastnasen ausgebildet sind. Die als Rastnasen ausgebildeten Rastelemente 11, 11' sind diametral gegenüberliegend am ringförmig ausgebildeten Anschlussbereich 10 angeordnet.

Gut zu erkennen ist, dass das erste der Rastelemente 11, starr am Anschlussbereich 10 ausgebildet ist. Das zweite der Rastelemente 11' ist mittels eines Federelements 15 federnd am Anschlussbereich 10 ausgebildet.

Die in Fig. 1 dargestellte Saugdüse 100 ist gänzlich aus einem transparenten Kunststoff gefertigt. Das Federelement 15 ist somit als Festgelenk in einem Übergangsbereich 16 zwischen Absauganschluss 30 und Anschlussbereich 10 ausgebildet. Wie der Fig. 1 entnommen werden kann, ist der Übergangsbereich 16 im Wesentlichen plan ausgebildet.

Entlang des äußeren Umfangs U des ringförmig ausgebildeten Anschlussbereichs 10 sind zwei Druckausgleichsöffnungen 40, 40' vorgesehen, die eine Verbesserung der Luftströmung beim Absaugen begünstigen.

Fig. 2 zeigt ein Frässystem 500 mit einer Handfräse 200, die einen Tiefenanschlag 10 aufweist, mittels dem eine Eintauchtiefe ET eines nicht dargestellten Fräswerkzeugs der Handfräse 200 begrenzt werden kann. Teil des Frässystems 500 ist die in Fig. 1 dargestellte Saugdüse 100.

Gut zu erkennen in Fig. 2 ist, dass die am Anschlussbereich 10 ausgebildeten Rastelemente 11, 11' dazu bestimmt sind, mit korrespondierenden Rastelementen 211, 211', 211", 211"' des Tiefenanschlags 210 in Eingriff zu stehen, wenn der Anschlussbereich 10 am Tiefenanschlag 210 befestigt ist (vgl. Fig. 3).

Wie bereits mit Bezug auf Fig. 1 ausgeführt, ist der Anschlussbereich 10 der Saugdüse 100 ringförmig ausgebildet und weist zwei Rastelemente 11, 11' auf, die jeweils als Rastnase ausgebildet sind. Die zu diesen als Rastnase ausgebildeten Rastelementen 11, 11' korrespondierenden Rastelemente 211, 211', 211", 211'" sind als Ausnehmungen ausgebildet, die entlang des ebenfalls ringförmig ausgebildeten Tiefenanschlags 210, und zwar in Umfangsrichtung U', angeordnet sind. Da am Anschlussbereich 10 zwei Rastnasen und am Tiefenanschlag 210 vier Ausnehmungen vorgesehen sind, kann die Saugdüse 100 in vier verschiedenen Ausrichtungen am Tiefenanschlag 210 angeordnet werden. Dies ermöglicht einen besonders flexiblen Einsatz.

Fig. 3 zeigt nunmehr die Saugdüse 100 in an der Handfräse 200 angeordnetem Zustand. In dieser Ansicht ist gut zu erkennen, dass der Tiefenanschlag 210 über eine Schraubverbindung 215 werkzeugfrei wiederlösbar an der Handfräse 200 befestigt ist.

Wird der in Fig. 3 gezeigte Tiefenanschlag 210 in seine obere Position verschoben, so kann die Schraubverbindung 215 durch ein Schraubenloch 217 geführt und somit der Tiefenanschlag 210 von der Handfräse 200 abgenommen werden. Ist, wie in Fig. 3 dargestellt, die Saugdüse 100 am Tiefenanschlag 210 befestigt, so wird mit Abnahme des Tiefenanschlags 210 auch die Saugdüse 100 von der Handfräse 200 abgenommen.

Ebenfalls gut zu erkennen in Fig. 3 ist, dass die Druckausgleichsöffnung 40 zumindest abschnittsweise nicht von dem Tiefenanschlag 210 abgedeckt ist, sodass ein gutes Absaugverhalten begünstigt wird.

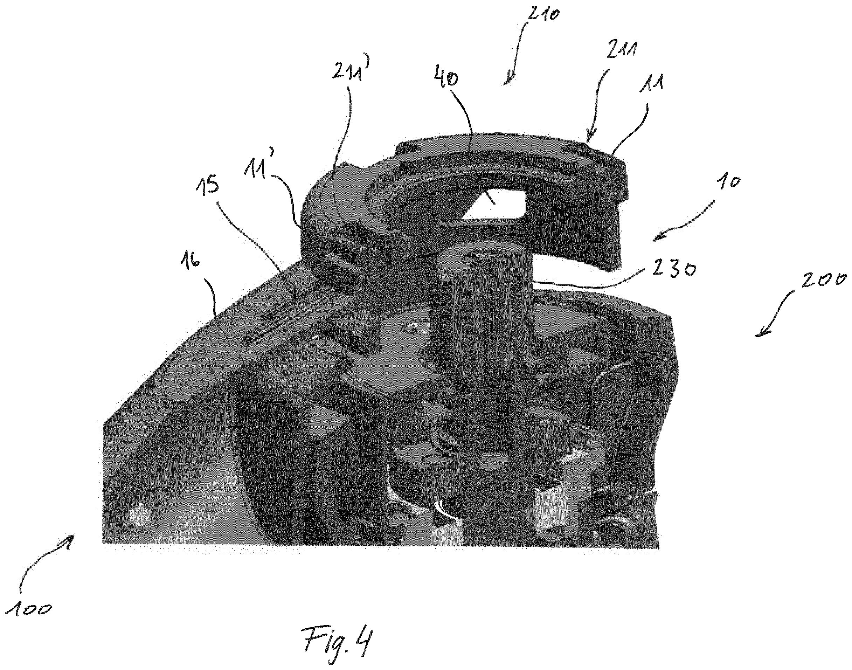

Eine Schnittdarstellung durch Saugdüse 100 und Tiefenanschlag 210 ist in Fig. 4 dargestellt. Dies dient insbesondere der Erläuterung, wie die als in Form von Rastnasen bereitgestellten Rastelemente 11, 11" mit den korrespondierenden Rastelementen 211, 211', die als Ausnehmungen im Tiefenanschlag 210 bereitgestellt sind, im Sinne eines Schnappverschlusses miteinander interagieren.

Fig. 4 zeigt den montierten Zustand der Saugdüse 100, bei dem das starr am Anschlussbereich 10 ausgebildete erste Rastelement 11 und das zweite der Rastelemente 11', das mittels eines Federelements 15 federnd am Anschlussbereich 10 ausgebildet sind, in den entsprechenden korrespondierenden Ausnehmungen eingerastet sind. Durch Aufbringen einer Kraft auf das Federelement 15, beispielsweise mittels des Daumens, kann das zweite der Rastelemente 11' nach unten bewegt und so aus dem korrespondierenden Rastelement 211' hinausbewegt werden. Dadurch wird die Saugdüse 100 aus dem Tiefenanschlag 210 gelöst.

Das Gleiche ist der Fall, wenn beispielsweise die Handfräse 200 mit angeordneter Saugdüse 100 auf den Boden fällt. In diesem Fall würde sich durch die Stoßkraft das Federelement 15 auslenken und den aus zwei Rastnasen und zwei korrespondierenden Ausnehmungen gebildeten Schnappverschluss freigeben. Somit würde ein Abbrechen des Anschlussbereichs 10 der Saugdüse vermieden werden. Gut zu erkennen ist, dass das Federelement 15 außerhalb des ringförmig ausgebildeten Anschlussbereichs 10 in Richtung des Absauganschlusses 30 befindlich ist.

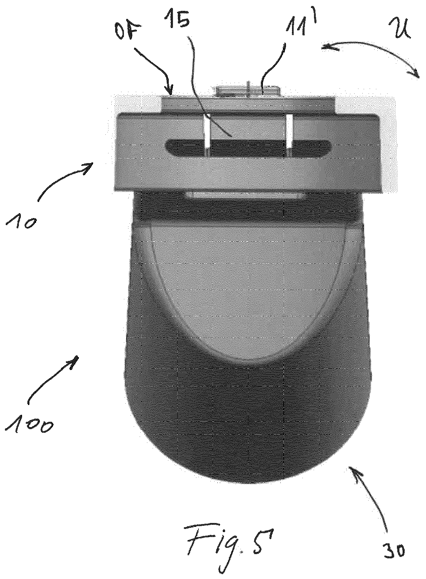

Fig. 5 zeigt schließlich eine Saugdüse 100 in Schnittdarstellung. Im unteren Bereich gut zu erkennen ist der Sauganschluss 30, über den die Saugdüse 100 an ein hier nicht gezeigtes Staubabsaugsystem anzuschließen ist. Wie der Fig. 5 entnommen werden kann, überragt das zweite der Rastelemente 11', das als Rastnase ausgebildet ist, eine Oberfläche OF, die dem Absauganschluss 30 abgewandt ist. Im Schnitt gut erkennbar ist, dass im ringförmig ausgebildeten Anschlussbereich 10 ausgebildete Federelement 15. Dieses bildet quasi eine abschnittsweise Unterbrechung des ringförmig ausgebildeten Anschlussbereichs 10. Somit ist auch ein leichtes Ausweichen des Federelements 15 in Umfangsrichtung U möglich. Dies erleichtert ein Lösen des bereits eingangs beschriebenen Schnappverschlusses, der funktional durch Rastnase und Ausnehmung gebildet ist.

### Bezugszeichenliste

- 10: Anschlussbereich
- 11, 11': Rastelement
- 15: Federelement
- 16: Übergangsbereich
- 30: Absauganschluss
- 40, 40': Druckausgleichsöffnung
- 100: Saugdüse
- 200: Handfräse
- 210: Tiefenanschlag
- 215: Schraubverbindung
- 217: Schraubloch
- 211 - 211'": korrespondierendes Rastelement
- 220: Fräswerkzeug
- 230: Aufnahme
- 300: Staubabsaugsystem
- 500: Frässystem
- ET: Eintauchtiefe
- OF: Oberfläche
- U: Umfangsrichtung der Saugdüse
- U': Umfangsrichtung des Tiefenanschlags

## Patentansprüche

1. Saugdüse (100) für eine Handfräse (200), wobei die Saugdüse (100) einen zum Anschluss an ein Staubabsaugsystem (300) ausgebildeten Absauganschluss (30) aufweist, und die Handfräse (200) mit einem Tiefenanschlag (210) ausgestattet ist, mittels dem eine Eintauchtiefe (ET) eines Fräswerkzeugs (220) der Handfräse (200) begrenzt werden kann,
**dadurch gekennzeichnet, dass** die Saugdüse (100) einen Anschlussbereich (10) aufweist über den die Saugdüse (100) wiederlösbar, vorzugsweise werkzeugfrei wiederlösbar, an dem Tiefenanschlag (210) befestigbar ist.

2. Saugdüse (100) nach Anspruch 1,
**dadurch gekennzeichnet, dass** am Anschlussbereich (10) wenigstens ein Rastelement (11, 11') ausgebildet ist, das mit einem korrespondierenden Rastelement (211, 211') des Tiefenanschlags (210) in Eingriff steht, wenn der Anschlussbereich (10) am Tiefenanschlag (210) befestigt ist.

3. Saugdüse (100) nach Anspruch 2,
**dadurch gekennzeichnet, dass** das Rastelement (11, 11') als Rastnase und das korrespondierenden Rastelement (211, 211') als Ausnehmung ausgebildet ist.

4. Saugdüse (100) nach einem der vorangehenden Ansprüche,
**dadurch gekennzeichnet, dass** der Anschlussbereich (10) ringförmig ausgebildet ist, vorzugsweise derart, dass der Anschlussbereich (10) das Fräswerkzeug (220) oder eine Aufnahmespindel (230) ringförmig umschließt, wenn der Anschlussbereich (10) am Tiefenanschlag (210) befestigt ist.

5. Saugdüse (100) nach Anspruch 4,
**dadurch gekennzeichnet, dass** am ringförmig ausgebildeten Anschlussbereich (10) zwei einander gegenüberliegende Rastelemente (11, 11') und/oder am Tiefenanschlag (210) wenigstens zwei korrespondierende Rastelemente (211, 211') ausgebildet sind.

6. Saugdüse (100) nach Anspruch 5,
**dadurch gekennzeichnet, dass** ein erstes (11) der Rastelemente (11, 11') starr am Anschlussbereich (10) ausgebildet ist und ein zweites (11') der Rastelemente (11, 11') mittels eines Federelements (15) federnd am Anschlussbereich (10) ausgebildet ist.

7. Saugdüse (100) nach Anspruch 6,
**dadurch gekennzeichnet, dass** das Federelement (15) außerhalb des ringförmig ausgebildeten Anschlussbereichs (10) in Richtung des Absauganschlusses (30) befindlich ist.

8. Saugdüse (100) nach einem der Ansprüche 2 bis 7,
**dadurch gekennzeichnet, dass** am Tiefenanschlag (210) vier korrespondierende Rastelemente (211, 211', 211", 211'") ausgebildet sind.

9. Saugdüse (100) nach einem der Ansprüche 4 bis 8,
**dadurch gekennzeichnet, dass** am äußeren Umfang (U) des ringförmig ausgebildeten Anschlussbereichs (10) wenigstens eine Druckausgleichsöffnung (40, 40') vorgesehen ist.

10. Saugdüse (100) nach einem der vorangehenden Ansprüche,
**dadurch gekennzeichnet, dass** die Saugdüse (100) aus einem transparenten Kunststoff besteht oder einen solchen aufweist.

11. Frässystem (500) mit Handfräse (200), die einen Tiefenanschlag (210) aufweist mittels dem eine Eintauchtiefe (ET) eines Fräswerkzeugs (220) der Handfräse (200) begrenzt werden kann, und mit einer Saugdüse (100) nach einem der vorangehenden Ansprüche.

12. Frässystem (500) nach Anspruch 11, wobei Tiefenanschlag (210) mittels einer Schraubverbindung (215) werkzeugfrei wiederlösbar an der Handfräse (200) befestigt oder befestigbar ist.
